# EUROPÄISCHE PATENTSCHRIFT

(11) **EP 4 306 335 B1**
(45) Veröffentlichungstag und Bekanntmachung des Hinweises auf die Patenterteilung: **13.08.2025**
(21) Anmeldenummer: 23178098.2
(22) Anmeldetag: 07.06.2023
(51) Int. Cl.: B60C 11/24

(54) **VERFAHREN ZUR BESTIMMUNG EINES ABRIEBWERTES**
METHOD FOR DETERMINING AN ABRASION VALUE
PROCÉDÉ DE DÉTERMINATION D'UNE VALEUR D'ABRASION

(30) Priorität: 15.07.2022 DE 102022207231
(43) Veröffentlichungstag der Anmeldung: 17.01.2024
(73) Patentinhaber: Continental Reifen Deutschland GmbH, 30175 Hannover (DE)
(72) Erfinder: Kurz, Martin, 30165 Hannover (DE); Lerner, Christian, 30165 Hannover (DE); Buschmeier, Jörg, 30165 Hannover (DE)
(74) Vertreter: Continental Corporation

(56) Entgegenhaltungen:
- JP-B2- 4 476 030
- US-A1- 2011 029 199
- US-A1- 2016 155 277
- US-A1- 2021 394 562

## Beschreibung

Die Erfindung betrifft ein Verfahren zur Bestimmung eines Abriebwertes.

Die Erfindung geht aus von einem Verfahren zur Bestimmung eines Abriebwertes eines Reifens eines Fahrzeugs, aufweisend einen der folgenden Schritte:
- Bereitstellen eines Fahrzeugs, wobei das Fahrzeug mindestens einen Reifen aufweist;
- Bereitstellen einer Auswertevorrichtung, wobei die Auswertevorrichtung zur Bestimmung eines Abriebwertes des mindestens einen Reifens in Abhängigkeit einer physikalischen Messgröße vorgesehen ist;
- Bestimmen des Abriebwertes des mindestens einen Reifens in Abhängigkeit der physikalischen Messgröße mittels der Auswertevorrichtung.

Der mindestens eine Reifen ist Bestandteil eines Rades des Fahrzeugs.

Bei dem Abriebwert handelt es sich beispielsweise um einen Wert des Abriebs für einen bestimmten Zeitraum der Nutzung des mindestens einen Reifens seit einer letzten unmittelbar vorhergegangenen Bestimmung des Abriebs des mindestens einen Reifens.

Bei der Auswertevorrichtung handelt es sich beispielsweise um einen Computer.

Aus dem Stand der Technik sind Verfahren zur Bestimmung eines Abriebwertes eines Reifens eines Fahrzeugs bekannt. Es ist dabei aus dem Stand der Technik auch bekannt, Abriebwerte des mindestens einen Reifens in Abhängigkeit einer physikalischen Messgröße mittels einer Auswertevorrichtung zu bestimmen.

Der weitere Stand der Technik wird gebildet durch die US 2016/155277 A1.

Bei den aus dem Stand der Technik bekannten Verfahren zur Bestimmung eines Abriebwertes eines Reifens eines Fahrzeugs könnte möglicherweise kein korrekter Abriebwert bestimmt werden. Hintergrund dieses Umstands, wonach möglicherweise kein korrekter Abriebwert bestimmt werden könnte, ist, dass bestimmte, einen Abrieb des mindestes einen Reifens verursachende oder bewirkende Ereignisse bei der Bestimmung des Abriebs des mindestens einen Reifens nicht berücksichtigt werden. Beispielsweise könnte bei einem Parkvorgang eines Kraftfahrzeugs, also einem Abstellen des Fahrzeugs, eine Drehung der Räder des Fahrzeugs im Stillstand des Fahrzeugs vorgenommen werden oder erfolgen. Diese Drehung der Räder, insbesondere im Stillstand des Fahrzeugs, könnte einer möglichen räumlichen Fixierung des Fahrzeugs auf seiner Parkposition dienen. Es soll mittels dieser räumlichen Fixierung insbesondere ein unerwünschtes Wegrollen des Fahrzeugs vermieden werden. Durch ein Einschlagen der Räder gegen eine mögliche Gefällerichtung des Geländes, auf dem das Fahrzeug geparkt worden ist, wird ein unerwünschtes Wegrollen des Fahrzeugs vermieden.

Die Drehung der Räder geht mit einer Drehung der an den Rädern angeordneten Reifen einher. Die Drehung der Reifen erfolgt insbesondere im Stillstand oder bei sehr geringen Geschwindigkeiten des Fahrzeugs und in unmittelbarem Kontakt des Reifens mit der Oberfläche des Geländes, auf dem das Fahrzeug geparkt worden ist oder geparkt werden soll. Diese Drehung eines Reifens auf dem Gelänge könnte mit einem bestimmten Abrieb des Reifens einhergehen, ohne, dass insbesondere eine Drehung des Reifens in seine Umlaufrichtung erfolgt. Die Umlaufrichtung des Reifens ist die Richtung, in die der Reifen während seines regulären Betriebs, also während seines Abrollens auf einer Fahrbahn, um eine Rotationsachse rotierbar ist. Die Nichtberücksichtigung dieses Abriebs könnte zu einer inkorrekten Bestimmung des Abriebwertes des Reifens führen. Da bei den aus dem Stand der Technik bekannten Verfahren möglicherweise nur solche Effekte und Bedingungen, die zu einem Abrieb des Reifens führen könnten, erfasst werden, bei denen zugleich stets eine Rotation des Reifens um seine Rotationsachse in seinem Umlaufrichtung erfolgt, könnten diese weiteren, beispielsweise bei einem Parkvorgang auftretenden, Effekte unberücksichtigt bleiben. Dieses Nicht-Berücksichtigen könnte zu einem inkorrekten, also ungenauen Abriebwert des Reifens führen.

Der Erfindung liegt daher die Aufgabe zu Grunde, ein Verfahren zur Bestimmung eines Abriebwertes eines Reifens eines Fahrzeugs bereitzustellen, mittels dem ein gegenüber dem Stand der Technik genauerer Abriebwert bestimmt werden kann.

Gelöst wird die erfindungsgemäß gestellte Aufgabe dadurch, dass das Verfahren die folgenden weiteren Schritte aufweist:
- Bestimmen einer Fahrtgeschwindigkeit des Fahrzeugs;
- Vergleichen der Fahrgeschwindigkeit mit einer Schwellengeschwindigkeit;
- Erfassen einer Bewegung des mindestens einen Reifens, wobei der Bewegung ein weiterer Abriebwert des mindestens einen Reifens zugeordnet wird;
- Bestimmen eines genaueren Abriebwertes mittels der Auswertevorrichtung in Abhängigkeit des Abriebwertes und des weiteren Abriebwertes für den Fall, wonach die Fahrgeschwindigkeit die Schwellengeschwindigkeit erreicht oder unterschreitet.

Die Fahrtgeschwindigkeit des Fahrzeugs wird insbesondere aus Fahrzeugeigendaten, zum Beispiel mittels eines Tachometers des Fahrzeugs oder mittels eines anderen Geschwindigkeitsmessers des Fahrzeugs bestimmt.

Das Vergleichen der Fahrgeschwindigkeit mit einer Schwellengeschwindigkeit erfolgt beispielsweise mittels eines Fahrzeugbordcomputers oder eines externen Computers. Insbesondere wird zu dem Vergleichen die Information über die Fahrtgeschwindigkeit an den Fahrzeugbordcomputer oder an den externen Computer, insbesondere mittels eines elektrischen oder elektromagnetischen Signals, übertragen.

Das Erfassen einer Bewegung des mindestens einen Reifens erfolgt beispielsweise mittels einer Sensorik an dem mindestens einen Reifen, mittels einer Sensorik an dem Rad das den mindestens einen Reifen aufweist, mittels einer Sensorik an der Radaufhängung des Rades das den mindestens einen Reifen aufweist oder mittels einer Sensorik an einer andere Position in oder an dem Fahrzeug.

Das Zuordnen eines weiteren Abriebwertes des mindestens einen Reifens zu der Bewegung erfolgt insbesondere mittels der Auswertevorrichtung. Dazu wird insbesondere vor dem Zuordnen eine Information über die Bewegung des mindestens einen Reifens an die Auswertevorrichtung, insbesondere mittels eines elektrischen oder elektromagnetischen Signals, übertragen.

Durch den erfindungsgemäßen Umstand, wonach das Verfahren die folgenden weiteren Schritte aufweist:
- Bestimmen einer Fahrtgeschwindigkeit des Fahrzeugs;
- Vergleichen der Fahrgeschwindigkeit mit einer Schwellengeschwindigkeit;
- Erfassen einer Bewegung des mindestens einen Reifens, wobei der Bewegung ein weiterer Abriebwert des mindestens einen Reifens zugeordnet wird;
- Bestimmen eines genaueren Abriebwertes mittels der Auswertevorrichtung in Abhängigkeit des Abriebwertes und des weiteren Abriebwertes für den Fall, wonach die Fahrgeschwindigkeit die Schwellengeschwindigkeit erreicht oder unterschreitet;
werden solche Bewegungen des mindestens einen Reifens berücksichtigt, die mit einem bestimmten Reifenabrieb einhergehen, wobei diese Bewegungen in wahrscheinlich keinem Zusammenhang mit durch eine Rotation des mindestens einen Reifens um seine Rotationsachse in die Umlaufrichtung hervorgerufenen Bewegungen des mindestens einen Reifens stehen.

Somit kann ein genauerer Abriebwert des mindestens eines Reifens ermittelt werden. Folglich wird ein verbessertes Verfahren zur Bestimmung eines Abriebwertes eines Reifens eines Fahrzeugs bereitgestellt.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung weist das Verfahren die folgenden Schritte auf:
- Bereitstellen einer Messvorrichtung, wobei die Messvorrichtung zur Messung der physikalischen Messgröße vorgesehen ist, wobei in Abhängigkeit der physikalischen Messgröße ein Abriebwert des mindestens einen Reifens bestimmbar ist;
- Messen der physikalischen Messgröße mittels der Messvorrichtung;
Bei der Messvorrichtung handelt es sich beispielsweise um einen Beschleunigungssensor an dem Fahrzeug, um einen Positionssensor an dem Fahrzeug, um einen Energieverbrauchssensor an dem Fahrzeug, um einen Reifendeformationssensor an dem mindestens einen Reifen oder um einen Raddrehsensor an dem Fahrzeug. Bei dem Positionssensor kann es sich insbesondere um einen GPS-Sensor handeln, GPS bedeutet Globales Positionierungs-System.

Die Auswertevorrichtung kann beispielsweise Bestandteil der Messvorrichtung sein oder räumlich von der Messvorrichtung getrennt sein. Für den beispielhaften Fall, wonach die Auswertevorrichtung von der Messvorrichtung räumlich getrennt ist, wird ein insbesondere elektrisches oder elektromagnetisches Signal von der Messvorrichtung an die Auswertevorrichtung übertragen, wobei das Signal die Information über die physikalische Messgröße enthält.

Gemäß einer nächsten vorzugsweisen Ausgestaltungsform der vorliegenden Erfindung liegt die Schwellengeschwindigkeit bei 0 m/s oder bei höchstens 1,5 m/s.

Gemäß der vorliegenden Erfindung wird die Bewegung des mindestens einen Reifens anhand einer Lenkwinkeländerung einer Lenkvorrichtung oder einer Lenkstange erfasst.

Bei der Lenkvorrichtung kann es sich beispielsweise um ein Lenkrad des Fahrzeugs handeln. Bei der Lenkvorrichtung kann es sich beispielsweise weiter um eine Lenkstange zur elektromechanischen oder mechanischen Übertragung von einem Lenkrad des Fahrzeugs an das Rad, das den mindestens einen Reifen aufweist, handeln.

Gemäß der vorliegenden Erfindung wird einer spezifischen Lenkwinkeländerung ein spezifischer weiterer Abriebwert zugeordnet und zur Bestimmung des genaueren Abriebwertes verwendet.

Zwischen einem Lenkwinkel der spezifischen Lenkwinkeländerung und dem der spezifischen Lenkwinkeländerung zugeordneten spezifischen weiteren Abriebwert besteht insbesondere ein linearer Zusammenhang.

Gemäß der vorliegenden Erfindung wird der spezifischen Lenkwinkeländerung ein spezifischer Abriebwert zugeordnet, falls ein absoluter Lenkwinkel in einer Mindestzeit einen Mindestwinkel überschreitet oder falls sich ein absoluter Lenkwinkel in einer Mindestzeit ändert und eine Rotationsgeschwindigkeit des mindestens einen Reifens in seine Umlaufrichtung einen Rotationsgeschwindigkeitsschwellenwert erreicht oder unterschreitet.

Gemäß einer nächsten vorzugsweisen Ausgestaltungsform der vorliegenden Erfindung wird die Bewegung des mindestens einen Reifens anhand einer Drehung einer Rotationsachse des mindestens einen Reifens erfasst.

Gemäß einer nächsten vorzugsweisen Ausgestaltungsform der vorliegenden Erfindung wird einer spezifischen Drehung einer Rotationsachse des mindestens einen Reifens ein spezifischer weiterer Abriebwert zugeordnet und zur Bestimmung des genaueren Abriebwertes verwendet.

Zwischen einem Drehwinkel der spezifischen Drehung einer Rotationsachse des mindestens einen Reifens und dem der spezifischen Drehung zugeordneten spezifischen weiteren Abriebwert besteht insbesondere ein linearer Zusammenhang.

Gemäß einer nächsten vorzugsweisen Ausgestaltungsform der vorliegenden Erfindung wird der spezifischen Drehung einer Rotationsachse des mindestens einen Reifens ein spezifischer Abriebwert zugeordnet, falls ein absoluter Drehwinkel der spezifischen Drehung einer Rotationsachse des mindestens einen Reifens in einer Mindestzeit einen Mindestwinkel überschreitet oder falls sich ein absoluter Drehwinkel der spezifischen Drehung einer Rotationsachse des mindestens einen Reifens in einer Mindestzeit ändert und eine Rotationsgeschwindigkeit des mindestens einen Reifens in seine Umlaufrichtung einen Rotationsgeschwindigkeitsschwellenwert erreicht oder unterschreitet. Gemäß einer nächsten vorzugsweisen Ausgestaltungsform der vorliegenden Erfindung wird der weitere Abriebwert in Abhängigkeit einer Temperatur des mindestens einen Reifens, eines Drucks des mindestens einen Reifens, einer Radlast des Rades, dessen Bestandteil der mindestens eine Reifen ist, und/oder einer Reifengröße des mindestens einen Reifens bestimmt. Dabei handelt es sich insbesondere um die Temperatur des mindestens einen Reifens in seinem Reifeninnenraum. Ferner handelt es sich bei dem Druck insbesondere um den Druck des mindestens einen Reifens in seinem Reifeninnenraum.

Weitere Vorteile, Merkmale und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines Fahrzeugs, das mindestens einen Reifen aufweist, dessen Abriebwert bestimmt werden kann;
Fig. 2: Eine schematische Darstellung mindestens eines Reifens, dessen Abriebwert erfindungsgemäß bestimmt werden kann;
Fig. 3: Eine schematische Darstellung einer Lenkvorrichtung oder einer Lenkstange.

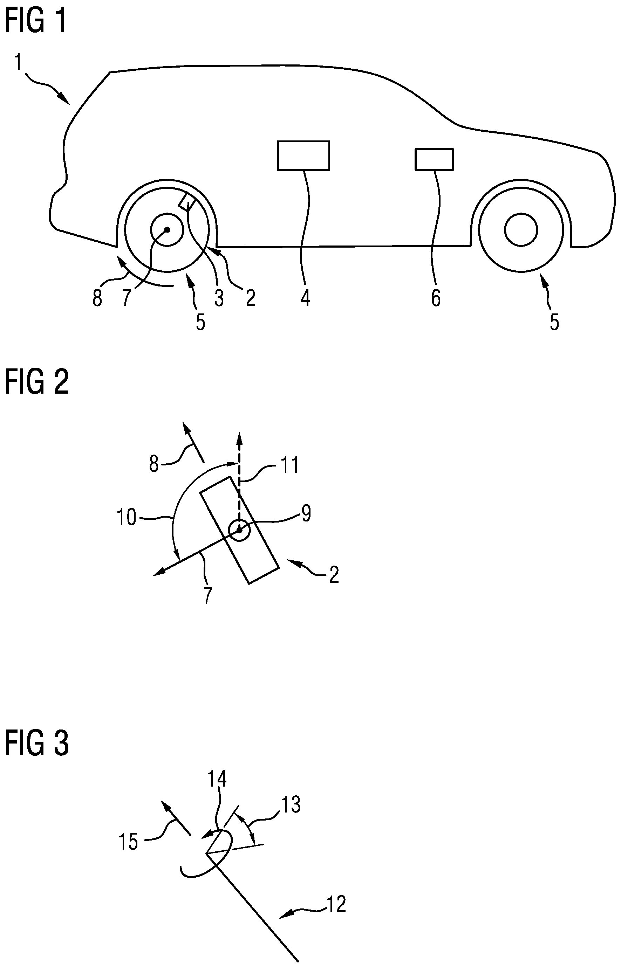

In der Figur 1 ist ein Fahrzeug 1 schematisch dargestellt. Das Fahrzeug 1 weist Räder 5 auf, wobei an mindestens einem Rad 5 mindestens ein Reifen 2 angeordnet ist. Der mindestens eine Reifen 2 ist um eine Rotationsachse 7 in eine Umlaufrichtung 8 rotierbar.

Insbesondere mittels einer Messvorrichtung 3 kann eine physikalische Messgröße gemessen werden, wobei in Abhängigkeit der physikalischen Messgröße ein Abriebwert des mindestens einen Reifens 2 bestimmbar ist.

Insbesondere ist die Messvorrichtung 3 Bestandteil des Fahrzeugs 1.

Mittels einer Auswertevorrichtung 4 kann ein Abriebwert des mindestens einen Reifens 2 in Abhängigkeit der physikalischen Messgröße bestimmt werden.

Erfindungsgemäß wird eine Fahrtgeschwindigkeit des Fahrzeugs 1 bestimmt, insbesondere mittels eines Geschwindigkeitsmessers 6. Diese Fahrgeschwindigkeit kann mit einer Schwellengeschwindigkeit verglichen werden.

Erfindungsgemäß wird eine Bewegung des mindestens einen Reifens 2 erfasst, wobei der Bewegung ein weiterer Abriebwert des mindestens einen Reifens 2 zugeordnet wird. Ein genauerer Abriebwert des mindestens einen Reifens 2 wird gemäß dem erfindungsgemäßen Verfahren mittels der Auswertevorrichtung 4 in Abhängigkeit des Abriebwertes und des weiteren Abriebwertes für den Fall bestimmt, wonach die Fahrgeschwindigkeit die Schwellengeschwindigkeit erreicht oder unterschreitet.

In der Figur 2 ist mindestens ein Reifen 2, dessen Abriebwert erfindungsgemäß bestimmt werden kann, schematisch dargestellt. Insbesondere kann die Bewegung des mindestens einen Reifens 2 anhand einer Drehung der Rotationsachse 7 des mindestens einen Reifens 2 um eine Drehachse 9 erfasst werden. Die Drehachse 9 steht senkrecht zu der Rotationsachse 7. Beispielsweise kann einer spezifischen Drehung einer Rotationsachse 7 des mindestens einen Reifens 2 um die Drehachse 9 ein spezifischer weiterer Abriebwert zugeordnet und zur Bestimmung des genauen Abriebwertes verwendet werden.

Vorzugsweise wird der spezifischen Drehung der Rotationsachse 7 des mindestens einen Reifens 2 ein spezifischer Abriebwert zugeordnet, falls ein absoluter Drehwinkel 10 der Drehung der Rotationsachse 7 des mindestens einen Reifens in einer Mindestzeit einen Mindestwinkel überschreitet oder falls sich ein absoluter Drehwinkel 10 der Drehung der Rotationsachse 7 des mindestens einen Reifens 2 in einer Mindestzeit ändert und eine Rotationsgeschwindigkeit des mindestens einen Reifens 2 in seine Umlaufrichtung 8 einen Rotationsgeschwindigkeitsschwellenwert erreicht oder unterschreitet.

Der Drehwinkel 10 wird durch die Rotationsachse 7 nach der Drehung um die Drehachse 9 und der ursprünglichen Richtung 11 der Rotationsachse 7 eingeschlossen. Die ursprüngliche Richtung 11 ist gestrichelt dargestellt und ist die Richtung der Rotationsachse 7 vor der Drehung um die Drehachse 9.

In der Figur 3 ist eine Lenkvorrichtung 12 schematisch dargestellt. Bei der Lenkvorrichtung 12 kann es sich beispielsweise weiter um eine Lenkstange zur elektromechanischen oder mechanischen Übertragung von einem in der Figur 3 nicht dargestellten Lenkrad des Fahrzeugs 1 an das Rad 5, das den mindestens einen Reifen 2 aufweist, handeln.

Die Lenkvorrichtung 12 kann sich um eine Drehachse 15 in eine Drehrichtung 14 drehen.

Insbesondere kann die Bewegung des mindestens einen Reifens 2 anhand einer Lenkwinkeländerung der Lenkvorrichtung 12 erfasst werden. Dabei kann beispielsweise einer spezifischen Lenkwinkeländerung ein spezifischer weiterer Abriebwert zugeordnet und zur Bestimmung des genaueren Abriebwertes verwendet werden. Vorzugsweise kann der spezifischen Lenkwinkeländerung ein spezifischer Abriebwert zugeordnet wird, falls ein absoluter Lenkwinkel 13 in einer Mindestzeit einen Mindestwinkel überschreitet oder falls sich ein absoluter Lenkwinkel 13 in einer Mindestzeit ändert und eine Rotationsgeschwindigkeit des mindestens einen Reifens 2 in seine Umlaufrichtung 8 einen Rotationsgeschwindigkeitsschwellenwert erreicht oder unterschreitet.

### Bezugszeichenliste

- 1: Fahrzeug
- 2: Reifen
- 3: Messvorrichtung
- 4: Auswertevorrichtung
- 5: Räder
- 6: Geschwindigkeitsmesser
- 7: Rotationsachse
- 8: Umlaufrichtung
- 9: Drehachse
- 10: Drehwinkel der Rotationsachse
- 11: Ursprüngliche Richtung der Rotationsachse
- 12: Lenkvorrichtung
- 13: Lenkwinkel
- 14: Drehrichtung der Lenkvorrichtung
- 15: Drehachse der Lenkvorrichtung

## Patentansprüche

1. Verfahren zur Bestimmung eines Abriebwertes eines Reifens (2) eines Fahrzeugs (1), aufweisend einen der folgenden Schritte:
- Bereitstellen eines Fahrzeugs (1), wobei das Fahrzeug (1) mindestens einen Reifen (2) aufweist;
- Bereitstellen einer Auswertevorrichtung (4), wobei die Auswertevorrichtung (4) zur Bestimmung eines Abriebwertes des mindestens einen Reifens (2) in Abhängigkeit einer physikalischen Messgröße vorgesehen ist;
- Bestimmen des Abriebwertes des mindestens einen Reifens (2) in Abhängigkeit der physikalischen Messgröße mittels der Auswertevorrichtung (4);
- Bestimmen einer Fahrtgeschwindigkeit des Fahrzeugs (1);
- Vergleichen der Fahrgeschwindigkeit mit einer Schwellengeschwindigkeit;
- Erfassen einer Bewegung des mindestens einen Reifens (2), wobei der Bewegung ein weiterer Abriebwert des mindestens einen Reifens (2) zugeordnet wird;
- Bestimmen eines genaueren Abriebwertes mittels der Auswertevorrichtung (4) in Abhängigkeit des Abriebwertes und des weiteren Abriebwertes für den Fall, wonach die Fahrgeschwindigkeit die Schwellengeschwindigkeit erreicht oder unterschreitet,
wobei die Bewegung des mindestens einen Reifens (2) anhand einer Lenkwinkeländerung einer Lenkvorrichtung (12) oder einer Lenkstange (12) erfasst wird und wobei einer spezifischen Lenkwinkeländerung ein spezifischer weiterer Abriebwert zugeordnet und zur Bestimmung des genaueren Abriebwertes verwendet wird, **dadurch gekennzeichnet, dass** der spezifischen Lenkwinkeländerung ein spezifischer Abriebwert zugeordnet wird, falls ein absoluter Lenkwinkel (13) in einer Mindestzeit einen Mindestwinkel überschreitet oder falls sich ein absoluter Lenkwinkel (13) in einer Mindestzeit ändert und eine Rotationsgeschwindigkeit des mindestens einen Reifens (2) in seine Umlaufrichtung (8) einen Rotationsgeschwindigkeitsschwellenwert erreicht oder unterschreitet.

2. Verfahren nach Anspruch 1, **gekennzeichnet durch** die weiteren Schritte:
- Bereitstellen einer Messvorrichtung (3), wobei die Messvorrichtung (3) zur Messung der physikalischen Messgröße vorgesehen ist, wobei in Abhängigkeit der physikalischen Messgröße ein Abriebwert des mindestens einen Reifens (2) bestimmbar ist;
- Messen der physikalischen Messgröße mittels der Messvorrichtung (3).

3. Verfahren nach Anspruch 1 oder Anspruch 2, **dadurch gekennzeichnet, dass** die Schwellengeschwindigkeit bei 0 m/s oder bei höchstens 1,5 m/s liegt.

4. Verfahren nach einem der vorhergehen Ansprüche, **dadurch gekennzeichnet, dass** die Bewegung des mindestens einen Reifens (2) anhand einer Drehung einer Rotationsachse (7) des mindestens einen Reifens (2) erfasst wird.

5. Verfahren nach dem vorhergehenden Anspruch, **dadurch gekennzeichnet, dass** einer spezifischen Drehung einer Rotationsachse (7) des mindestens einen Reifens (2) ein spezifischer weiterer Abriebwert zugeordnet und zur Bestimmung des genaueren Abriebwertes verwendet wird.

6. Verfahren nach dem vorhergehenden Anspruch; **dadurch gekennzeichnet, dass** der spezifischen Drehung einer Rotationsachse (7) des mindestens einen Reifens ein spezifischer Abriebwert zugeordnet wird, falls ein absoluter Drehwinkel (10) der Drehung einer Rotationsachse (7) des mindestens einen Reifens (2) in einer Mindestzeit einen Mindestwinkel überschreitet oder falls sich ein absoluter Drehwinkel (10) der Drehung einer Rotationsachse (7) des mindestens einen Reifens (2) in einer Mindestzeit ändert und eine Rotationsgeschwindigkeit des mindestens einen Reifens (2) in seine Umlaufrichtung (8) einen Rotationsgeschwindigkeitsschwellenwert erreicht oder unterschreitet.

7. Verfahren nach einem der vorhergehenden Ansprüche, **dadurch gekennzeichnet, dass** der weitere Abriebwert in Abhängigkeit einer Temperatur des mindestens einen Reifens (2), eines Drucks des mindestens einen Reifens (2), einer Radlast des Rades (5), dessen Bestandteil der mindestens eine Reifen ist (2), und/oder einer Reifengröße des mindestens einen Reifens (2) bestimmt wird.

## Claims

1. Method for determining an abrasion value of a tyre (2) of a vehicle (1) comprising one of the following steps:
- providing a vehicle (1), the vehicle (1) having at least one tyre (2);
- providing an evaluation device (4), the evaluation device (4) being intended for determining an abrasion value of the at least one tyre (2) in dependence on a physical measured variable;
- determining the abrasion value of the at least one tyre (2) in dependence on the physical measured variable by means of the evaluation device (4);
- determining a driving speed of the vehicle (1);
- comparing the driving speed with a threshold speed;
- detecting a movement of the at least one tyre (2), the movement being assigned a further abrasion value of the at least one tyre (2);
- determining a more accurate abrasion value by means of the evaluation device (4) in dependence on the abrasion value and the further abrasion value for the case where the driving speed reaches or falls below the threshold speed,
the movement of the at least one tyre (2) being detected on the basis of a change in the steering angle of a steering device (12) or a steering rod (12) and a specific change in steering angle being assigned a specific further abrasion value and used for determining the more accurate abrasion value, **characterized in that** the specific change in steering angle is assigned a specific abrasion value if an absolute steering angle (13) exceeds a minimum angle in a minimum time or if an absolute steering angle (13) changes in a minimum time and a rotational speed of the at least one tyre (2) in its direction of rotation (8) reaches or falls below a rotational-speed threshold value.

2. Method according to Claim 1, **characterized by** the further steps of:
- providing a measuring device (3), the measuring device (3) being intended for measuring the physical measured variable, an abrasion value of the at least one tyre (2) being determinable in dependence on the physical measured variable;
- measuring the physical measured variable by means of the measuring device (3).

3. Method according to Claim 1 or Claim 2, **characterized in that** the threshold speed lies at 0 m/s or at most at 1.5 m/s.

4. Method according to one of the preceding claims, **characterized in that** the movement of the at least one tyre (2) is detected on the basis of a turning of an axis of rotation (7) of the at least one tyre (2).

5. Method according to the preceding claim, **characterized in that** a specific turning of an axis of rotation (7) of the at least one tyre (2) is assigned a specific further abrasion value and is used for determining the more accurate abrasion value.

6. Method according to the preceding claim, **characterized in that** the specific turning of an axis of rotation (7) of the at least one tyre is assigned a specific abrasion value if an absolute turning angle (10) of the turning of an axis of rotation (7) of the at least one tyre (2) exceeds a minimum angle in a minimum time or if an absolute turning angle (10) of the turning of an axis of rotation (7) of the at least one tyre (2) changes in a minimum time and a rotational speed of the at least one tyre (2) in its direction of rotation (8) reaches or falls below a rotational-speed threshold value.

7. Method according to one of the preceding claims, **characterized in that** the further abrasion value is determined in dependence on a temperature of the at least one tyre (2), a pressure of the at least one tyre (2), a wheel load of the wheel (5) of which the at least one tyre (2) is a component part, and/or a tyre size of the at least one tyre (2).

## Revendications

1. Procédé pour déterminer une valeur d'abrasion d'un pneumatique (2) d'un véhicule (1), comprenant l'une des étapes suivantes :
- se mettre à disposition un véhicule (1), le véhicule (1) comportant au moins un pneumatique (2) ;
- se mettre à disposition un dispositif d'évaluation (4), le dispositif d'évaluation (4) étant prévu pour déterminer une valeur d'abrasion dudit au moins un pneumatique (2) en fonction d'une grandeur physique mesurée ;
- déterminer la valeur d'abrasion dudit au moins un pneumatique (2) en fonction de la grandeur physique mesurée au moyen du dispositif d'évaluation (4) ;
- déterminer une vitesse de déplacement du véhicule (1) ;
- comparer la vitesse de déplacement à une vitesse seuil ;
- détecter un mouvement dudit au moins un pneumatique (2), une valeur supplémentaire d'abrasion dudit au moins un pneumatique (2) étant attribuée audit mouvement ;
- déterminer une valeur d'abrasion plus précise au moyen du dispositif d'évaluation (4) en fonction de la valeur d'abrasion et de la valeur d'abrasion supplémentaire dans le cas où la vitesse de déplacement atteint ou passe en dessous de la vitesse seuil,
le mouvement dudit au moins un pneumatique (2) étant détecté au moyen d'une variation de l'angle de braquage d'un dispositif de direction (12) ou d'une barre de direction (12) et une valeur d'abrasion supplémentaire spécifique étant attribuée à une variation spécifique de l'angle de braquage et utilisée pour déterminer la valeur d'usure plus précise, **caractérisé en ce qu'**une valeur d'abrasion spécifique est attribuée à la variation spécifique de l'angle de braquage lorsqu'un angle de braquage absolu (13) dépasse un angle minimal dans un temps minimal ou lorsqu'un angle de braquage absolu (13) change dans un temps minimal et qu'une vitesse de rotation dudit au moins un pneumatique (2) dans son sens de rotation (8) atteint ou passe en dessous d'une valeur seuil de vitesse de rotation.

2. Procédé selon la revendication 1, **caractérisé par** les étapes supplémentaires suivantes :
- se mettre à disposition un dispositif de mesure (3), le dispositif de mesure (3) étant prévu pour mesurer la grandeur physique, une valeur d'abrasion dudit au moins un pneumatique (2) étant apte à être déterminée en fonction de la grandeur physique ;
- mesurer la grandeur physique au moyen du dispositif de mesure (3).

3. Procédé selon la revendication 1 ou la revendication 2, **caractérisé en ce que** la vitesse seuil est de 0m/s ou de 1,5m/s au maximum.

4. Procédé selon l'une des revendications précédentes, **caractérisé en ce que** le mouvement dudit au moins un pneumatique (2) est détecté au moyen d'une rotation d'un axe de rotation (7) dudit au moins un pneumatique (2).

5. Procédé selon la revendication précédente, **caractérisé en ce qu'**une valeur d'abrasion supplémentaire spécifique est attribuée à une rotation spécifique d'un axe de rotation (7) dudit au moins un pneumatique (2) et utilisée pour déterminer la valeur d'abrasion plus précise.

6. Procédé selon la revendication précédente, **caractérisé en ce qu'**une valeur d'abrasion spécifique est attribuée à la rotation spécifique d'un axe de rotation (7) dudit au moins un pneumatique lorsqu'un angle de rotation absolu (10) de la rotation d'un axe de rotation (7) dudit au moins un pneumatique (2) dépasse un angle minimal dans un temps minimal ou lorsqu'un angle de rotation absolu (10) de la rotation d'un axe de rotation (7) dudit au moins un pneumatique (2) varie dans un temps minimal et qu'une vitesse de rotation dudit au moins un pneumatique (2) dans son sens de rotation (8) atteint ou passe en dessous d'une valeur seuil de vitesse de rotation.

7. Procédé selon l'une des revendications précédentes, **caractérisé en ce que** la valeur d'abrasion supplémentaire est déterminée en fonction d'une température dudit au moins un pneumatique (2), d'une pression dudit au moins un pneumatique (2), d'une charge de la roue (5) dont ledit au moins un pneumatique (2) est un composant et/ou d'une taille dudit au moins un pneumatique (2).
